# EUROPEAN PATENT SPECIFICATION

(11) **EP 4 356 773 B1**
(45) Date of publication and mention of the grant of the patent: **09.12.2026**
(21) Application number: 23203868.7
(22) Date of filing: 16.10.2023
(51) Int. Cl.: A43B 13/12, A43B 13/18, B29D 35/08, B29D 35/14, B29D 35/00, B29D 35/10

(54) **SOLE FOR WORK SHOES**
SOHLE FÜR ARBEITSSCHUHE
SEMELLE DE CHAUSSURES DE TRAVAIL

(30) Priority: 18.10.2022 IT 202200021471
(43) Date of publication of application: 24.04.2024
(73) Proprietor: JV International S.r.l., 20122 Milano (IT)
(72) Inventor: MERLO, Ambrogio, 22063 Cantù (Como) (IT)
(74) Representative: Feltrinelli, Secondo Andrea

(56) References cited:
- KR-A- 20020 005 329
- US-A1- 2020 107 608
- US-A1- 2021 120 913

## Description

### TECHNICAL FIELD OF THE INVENTION

The present invention concerns a sole for footwear, particularly suitable for being used in the production of work footwear, but also footwear of other types, such as for example sports, orthopedic, running, walking, trekking footwear, etc.

The present invention also concerns a footwear, in particular a work footwear, which includes the above-mentioned sole.

Furthermore, the present invention also concerns a mold for obtaining a sole for footwear and a method for obtaining the above-mentioned sole for footwear.

### STATE OF THE PRIOR ART

Soles are commonly provided with a tread layer with a midsole, these components then being connected to an upper of a footwear.

In the technical sector of work footwear, the comfort of the latter when worn by the user constitutes a significant problem.

Typically, the soles and, consequently, also the work footwear, are rather rigid and uncomfortable, as they need to comply with certain safety regulations.

The sector has always paid greater attention to the technical measures necessary to improve or guarantee a certain level of protection and safety of footwear.

However, such work footwear are intended not only to be worn by the user for many consecutive hours a day, but also in activities in which the user is in continuous movement.

The cushioning soles for work footwear of the type known today typically include a tread layer of elastically yielding material, generally made of polyurethane or also of EVA (Ethylene Vinyl Acetate) and a midsole also made of polyurethane or of EVA.

It has been observed that these cushioning soles of a known type certainly have a good elastic behavior in the impact of the foot on the ground but, especially in the case of prolonged use, they prove to be less than comfortable in the sense that they exert a limited soft damping action of the impact, which translates into a feeling of rigidity under the foot.

The limited flexibility of elastic elements such as the polyurethane midsole, which must in any case have a certain thickness, also contributes to this feeling of rigidity.

It is therefore necessary to guarantee a satisfactory level of comfort for the user.

Documents KR20020005329A and US2020107608A1 describe respective soles according to the state of the prior art.

Referring first to document KR20020005329A, it does not describe a sole for footwear having a lower or tread layer made of rubber and an intermediate layer or midsole, made of polyurethane, molded on or around the lower or tread layer. In contrast, document KR20020005329A simply describes the creation of an EVA midsole having different degrees of hardness.

Similarly, document US2020107608A1 also does not describe a sole for footwear having a lower or tread layer made of rubber and an intermediate layer or midsole, made of polyurethane, molded on or around the lower or tread layer. On the contrary, document US2020107608A1 describes a sole for footwear having a lower or tread layer of polyurethane, nitrile or a combination thereof as well as a midsole of polyurethane which however is not molded on the lower or tread layer.

There is therefore a need to design and manufacture a sole for footwear, particularly suitable for work footwear which allows the disadvantages of the prior art listed above to be overcome.

### OBJECTS OF THE INVENTION

The technical aim of the present invention is therefore to improve the state of the art in the sector of soles for footwear and, more particularly, in the sector of soles for work footwear, but also footwear of other types, such as for example sports, orthopedic, running, walking, trekking footwear, etc.

Another object of the present invention is to develop a sole for footwear that ensures a high level of comfort to the user's foot even if used continuously for many hours.

A further object of the present invention is to provide a sole for footwear that is simple to be manufactured and cost-effective to be produced.

Another object of the present invention is to provide a sole which is elastic and resistant to traction.

Yet another object of the present invention is to provide a method of obtaining a sole for footwear which is simple, fast and reliable.

The invention is set out in the appended set of claims.

### BRIEF DESCRIPTION OF THE DRAWINGS

Other features and advantages of the invention will be more evident from the description of embodiments of a sole for footwear, illustrated by way of example in the attached drawings in which:
- figure 1 is an exploded view of a sole for footwear according to an embodiment of the present invention shown for illustrative purposes together with an upper layer or insole of a respective footwear,
- figure 2 is a cross-sectional view of a sole for footwear according to the embodiment of the present invention shown in figure 1 shown for illustrative purposes together with an upper layer or insole of a respective footwear,
- figure 3 is a perspective view of a sole for footwear according to the embodiment of the present invention shown in figure 1 shown for illustrative purposes together with an upper layer or insole of a respective footwear,
- figure 4 is a cross-sectional view taken at the back of a sole for footwear according to the embodiment of the present invention shown in figure 1 with the perimeter edge or flange trimmed or eliminated,
- figure 5 is a longitudinal section view of the footwear with the sole of figure 4,
- figure 6 is a cross-sectional view taken at the tip of a footwear with the sole according to the embodiment of the present invention shown in figure 1 with the perimeter edge or flange trimmed or eliminated,
- figures 7 and 8 show a mold for obtaining a sole for footwear according to an embodiment of the present invention in an open operating configuration and in a closed operating configuration, respectively,
- figures from 9 to 16 show the steps of a method for obtaining a sole for footwear according to an embodiment of the present invention.

In the attached drawings, identical parts or components are identified by the same reference numbers.

### EMBODIMENTS OF THE INVENTION

With reference to the attached figures, the number 1 generally indicates a sole for footwear according to a non-limiting embodiment of the present invention.

The sole 1 according to the present invention is particularly, but not exclusively, suitable for being used as a sole for a work footwear, but also for another type, such as for example a sports, orthopedic, running, walking, trekking footwear, etc.

Typically, these footwears are worn by the user for many hours a day, and therefore, to relieve the stresses generated by prolonged walking or in any case by movement of the foot, they require high comfort and suitable cushioning.

The sole 1 will make it possible to obtain, as will be better understood with the following description, a high level of comfort and optimized cushioning for a user's foot F.

The sole 1 according to the present invention includes a lower or tread layer 2, made of rubber, which includes or delimits a lower surface 2a designed, in use, to come in contact at least partially with the external environment or with the ground and an upper surface 2b opposite to the lower surface 2a.

The sole 1 according to the present invention then includes an intermediate layer or midsole 3, made of polyurethane, molded on or around the lower or tread layer 2, which includes or defines a lower surface 3a operatively connected with the upper surface 2b of the lower or tread layer 2 and an upper surface 3b opposite the lower surface 3a.

In particular, the intermediate layer or midsole 3 includes or delimits a front portion or forefoot zone 4a, an intermediate portion or midfoot zone 4b, a rear portion or rearfoot zone 4c, at least one first housing zone HZ1 open upwards defined or included in at least the rear portion or rearfoot zone 4c and/or in at least the intermediate portion or midfoot zone 4b, the intermediate layer or midsole 3 delimiting one or more windows W at the at least one first housing zone HZ1.

More particularly, one or more windows W are formed through the intermediate layer or midsole 3, for example in a first annular wall 3c thereof.

It should be noted that the intermediate portion or midfoot zone 4b acts as a connection between the front portion or forefoot zone 4a and the rear portion or rearfoot zone 4c.

The sole 1 according to the present invention also includes at least one cushioning insert 5, housed at least partially in the at least one first housing zone HZ1, if desired facing, in use, the sole of a user's foot F, which is elastically yielding and compressible under the user's weight.

In particular, the one or more windows W are designed to allow viewing the sole or rather a respective footwear from the outside and, if desired, the elastic deformation for example towards the outside, of the at least one cushioning insert 5 housed at least partially in the at least one first housing zone HZ1.

In essence, the sole 1 which includes the lower or tread layer 2, the intermediate layer or midsole 3 and the at least one cushioning insert 5 according to the present invention constitute an assembly that can be used and moved separately.

More specifically, such sole 1 or these components of the sole is/are moveable as a single body or a single component, as the respective components are rigidly connected to each other, for subsequent constraint by molding to an upper in order to obtain a footwear.

Preferably, the sole 1 or rather a respective footwear also includes an upper layer or insole 6 which includes or delimits a lower surface 6a, operationally connected with the intermediate layer or midsole 3 and, if desired, even with the at least one cushioning insert 5, and an upper surface 6b, opposite to the lower surface 6a, which can or not be designed, in use, to come into contact with the sole of the user's foot F.

As regards in detail the upper layer or insole 6, it could also be considered as part of the sole, but preferably it is a component that is formed when the footwear is made and is not part of the sole components movable as a single body or single component for subsequent constraint by molding to an upper in order to make a footwear. Therefore, the upper layer or insole 6 can also be considered as a component of the final footwear, which when made, actually generates the constraint or connection between sole 1 and upper 7.

In any case, the upper layer 6 is designed to close the first housing zone HZ1 at the top.

According to the non-limiting embodiment of the present invention shown in the figures, the at least one first housing zone HZ1 is defined by a lowered portion or depression 4d obtained at the rear portion or rearfoot zone 4c and in part of the intermediate portion or midfoot zone 4b of the intermediate layer or midsole 3.

Therefore, the upper surface 3b of the intermediate layer or midsole 3 has a front portion 3b1 and a rear portion 3b2 defining the bottom of the lowered portion or depression 4d connected to each other by a stepped wall section with a main vertical extension 3b3, which is curved or straight and defines the front engagement or containment portion for the at least one cushioning insert 5.

With reference to this aspect, the at least one cushioning insert 5 could be housed substantially to measure in the first housing zone HZ1.

Advantageously, the intermediate layer or midsole 3 has a base wall 3ab as well as a first annular wall 3c extending, in use, upwards from the external edge of the base wall 3ab.

The first annular wall 3c is partially wrapped and abutted as well as connected to the upper layer 6.

If desired, the first annular wall 3c of the intermediate layer or midsole 3 comprises, starting from the base wall 3ab at the rear portion or rearfoot zone 4c, a first curved or straight length 3c1 extending, in use, upwards starting from the base wall 3ab and with a distance decreasing from the center line of the sole 1 moving away from the base wall 3ab and then a second curved or straight length 3c2 extending, in use, upwards starting from the first length 3c1 and with a constant or distance increasing from the center line of the sole 1 moving away from the base wall 3ab.

At the front portion or forefoot zone 4a, the first annular wall 3c preferably includes a second length 3c2 only.

As regards the intermediate portion or midfoot zone 4b, it could include the second length 3c2 or both lengths 3c1, 3c2.

Preferably, the intermediate layer or midsole 3 includes or delimits an outwardly protruding perimeter edge or flange 3c3 extending from the first annular wall 3c.

The perimeter edge or flange 3c3 is designed to facilitate the operational connection of the upper layer or insole 6 with the intermediate layer or midsole 3.

If desired, a terminal length 3c4 is also provided, extending from the end of the perimeter edge or flange 3c3 facing, in use, downwards or towards the ground.

So far as the one or more windows W are concerned, according to the non-limiting embodiment of the present invention shown in the figures, the intermediate layer or midsole 3 delimits, at the at least one first housing zone HZ1, two, three or four windows W, of any suitable shape, for example substantially triangular, if desired arranged in symmetrical pairs with reference to a median longitudinal plane of the sole 1 orthogonal to the lower surface 2a of the lower or tread layer 2.

In other non-limiting embodiments of the present invention, the windows W could have a different shape, for example an elliptical, rectangular or, more generally, an elongated shape, they could have a different number, for example two, three, five or more, and they could be arranged according to other geometric criteria.

In general, the one or more windows W preferably delimit a viewing and deformation surface WS equal to at least 5%, even more preferably equal to at least 10%, if desired equal to at least 15% of the lateral surface of the at least one cushioning insert 5 housed at least partially in the at least one first housing zone HZ1.

It should be noted that, in the event that more than one window W is provided, the viewing and deformation surface WS is to be understood as the sum of all portions of the lateral surface of the at least one cushioning insert 5 delimited by each window W while, in the case of a single window W, the viewing and deformation surface WS is to be understood as equal to the portion of the lateral surface of the at least one cushioning insert 5 delimited by this single window W.

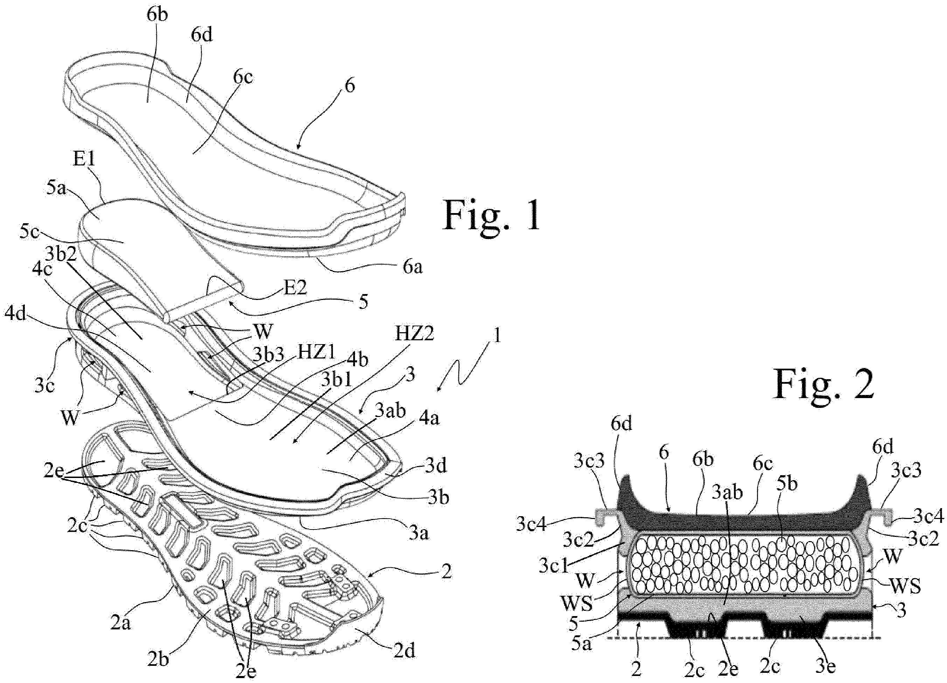

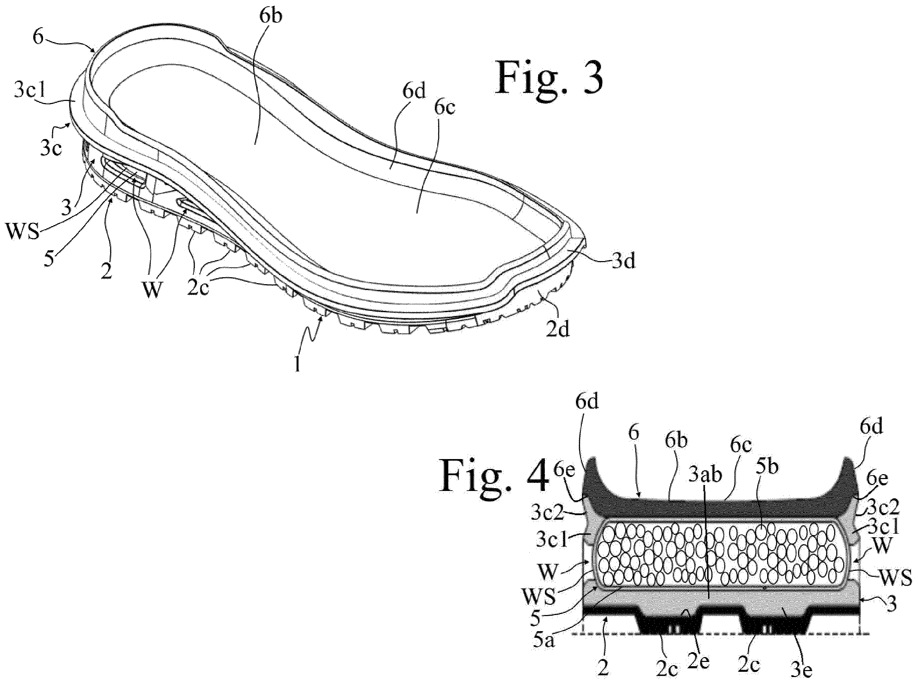

As regards the at least one cushioning insert 5, it preferably comprises a main body 5a made of a first material or matrix and a plurality of granule elements 5b embedded in the first material or matrix of the main body 5a (see, for example, the cross sections shown in figures 2 and 4).

It should be noted that the granule elements 5b of the plurality could have different configurations, for example polyhedral, cylindrical, spherical, pyramidal or conical.

Advantageously, the first material or matrix is a resin, if desired transparent or semi-transparent, whereas the plurality of granule elements 5b can be made of polyurethane.

The combination of the main body 5a made of resin and the plurality of granule elements 5b made of polyurethane and embedded in the main body 5a allows to obtain a cushioning insert 5 capable of better absorbing the stresses generated on a user's foot, even if a footwear equipped with a sole 1 is used for many hours during a day.

According to the non-limiting embodiment of the present invention shown in the figures, each granule element 5b of the plurality of granule elements 5b is in contact with at least one other granule element 5b or has a distance equal to or less than 2 mm with at least another granule element 5b more proximal thereto. This arrangement allows to improve the absorption of the stresses of the at least one cushioning insert 5 by determining a compact structure of granule elements 5b.

From a structural point of view, the at least one cushioning insert 5 is, preferably, fixed immovably in the at least one first housing zone HZ1, for example by gluing and can have a configuration that substantially follows the configuration of the at least one first housing zone HZ1, which follows the conformation of the portion of the intermediate layer or midsole 3 in which it is delimited or included.

In other not-limiting embodiments of the present invention, the configuration of the at least one cushioning insert 5 could also be different, for example in the case in which several cushioning inserts 5 were provided in the same first housing zone HZ1.

Advantageously, the at least one cushioning insert 5 has a decreasing thickness with reference to its first end E1 proximal to the rear portion or rearfoot zone 4c towards its second end E2 proximal to said intermediate portion or midfoot zone 4b or to said front portion or forefoot zone 4a.

Even more advantageously, the thickness decreases gradually and continuously for its entire extension, and thus without intermediate areas of increase in thickness in the transition from the end E1 to the end E2.

As it will be understood, the decreasing thickness of the at least cushioning insert 5 allows to optimize the absorption of the stresses generated on the user's foot, which, typically, are greater at the rear portion or rearfoot zone 4c and progressively decrease approaching the intermediate portion or midfoot zone 4b or the front portion or forefoot zone 4a.

If desired, the at least one cushioning insert 5 can be constrained or in any case housed in the at least one first housing zone HZ1 by initially bringing its second end E2 into abutment with the stepped wall section with main vertical extension 3b3, and then inserting, for example by fitting, its other or first end E1 in the at least one first housing zone HZ1.

Preferably, the at least one cushioning insert 5 has a surface bulk, with respect to the upper surface 3b of the intermediate layer or midsole 3, between 20% and 60%, preferably between 30% and 50%, for example about 40 %, of the same.

According to the non-limiting embodiment of the present invention shown in the figures, the sole 1 comprises only a cushioning insert arranged in a first housing zone HZ1 included or defined at the rear portion or rearfoot zone 4c and in part at the intermediate portion or midfoot zone 4b.

In other non-limiting embodiments of the present invention, more cushioning inserts 5 could even be provided, if desired also positioned at a further first housing zone delimited or included in the front portion or forefoot zone 4a.

Thus, for example, a cushioning insert 5 positioned in the first housing zone HZ1 delimited at the rear portion or rearfoot zone 4c and another cushioning insert 5 positioned in another first housing zone HZ1 delimited at the front portion or forefoot zone 4a could be provided.

Furthermore, other non-limiting embodiments of the present invention could also include more cushioning inserts 5 separated from each other and positioned at a respective first housing zone HZ1 included or delimited in the rear portion or rearfoot zone 4c and/or in the intermediate portion or midfoot zone 4b.

Advantageously, the at least one cushioning insert 5 can comprise or define a plurality of hollowed portions (not shown in the figures), for example with a cylindrical shape, designed to prevent the swelling of the at least cushioning insert 5 during the forming step of the same.

If desired, the development in depth of each hollowed portion can vary according to the thickness of the at least one cushioning insert 5 in the delimitation point or area of the hollowed portion considered, for example by providing a greater depth at the hollowed portions defined or included in delimitation points or areas where the thickness of the at least one cushioning insert 5 is greater.

Preferably, the plurality of hollowed portions is distributed homogeneously on an upper, in use, surface 5c of the at least one cushioning insert 5, for example according to one or more parallel rows.

Furthermore, according to the non-limiting embodiment of the present invention shown in the figures, the at least one cushioning insert 5 protrudes upwards with respect to the at least one first housing zone HZ1 so as to allow better cushioning sensitivity for the user's foot.

From a manufacturing point of view, the intermediate layer or midsole 3 is advantageously molded above or on or (partially) around the lower or tread layer 2, preferably by injection molding or casting in a suitable mold.

It should be noted that the molding makes it possible to combine a lower or tread layer 2 made of rubber with an intermediate layer or midsole 3 made of polyurethane, which have always been materials difficult to connect permanently unless using adhesive means, for example glue or similar.

Furthermore, the lower or tread layer 2 can delimit a plurality, any number between two and thirty or more, recesses 2e open only upwards at the respective upper surface 2b, while the intermediate layer or midsole 3 has portions 3e, in a number equal to or less than the recesses 2e, downwardly projecting starting from the lower surface 3a of the intermediate layer or midsole 3. Each projecting portion 3e fills and therefore engages at least in part (for example, at least 50%, 60%, 70% or 80%) and, preferably, entirely a respective recess 2e of the plurality of recesses 2e.

If desired, each of the recesses 2e is defined by a downward protruding portion 2c of the lower or tread layer 2, which protruding portion 2c defines a respective cleat of the sole 1.

Clearly, there could be one or more recesses 2e not defined by a protruding portion 2c and non-hollow protruding portions 2c.

Advantageously, the plurality of protruding portions 2c is configured, in use, to improve the hold or grip of the sole 1 with the ground.

If desired, this plurality of protruding portions 2c can be arranged so as to delimit a channel extending along a median longitudinal plane of the sole 1 orthogonal to the lower surface 2a of the lower or tread layer 2, for example in a manner symmetrical with respect to this median longitudinal plane.

Furthermore, the intermediate layer or midsole 3 can also include or delimit at least one second housing zone HZ2 configured to at least partially house the upper layer or insole 6.

In this regard, the upper layer or insole 6 is molded on or around the intermediate layer or midsole 3, preferably by injection molding.

Advantageously, the upper layer or insole 6 is injection molded between the intermediate layer or midsole 3 and the upper 7 so as to create a sole-to-upper constraint.

In this regard, if present, the perimeter edge or flange 3c3 can act as a sealing gasket for the injection of material into the mold used for obtaining, for example by injection molding, the upper layer or insole 6.

Preferably, if present, the perimeter edge or flange 3c3 can be trimmed and therefore eliminated following the molding, for example by injection, of the upper layer or insole 6 on the intermediate layer or midsole 3.

From a structural point of view, the upper layer or insole 6 can advantageously include a bottom portion 6c and a perimeter wall 6d, if desired annular, which could be designed to wrap (directly or with the interposition of another component of a respective footwear) part of the sole of a user's foot F.

In this case, the first annular wall 3c, if desired the respective second curved or straight length 3c2, is partially wound and abutted as well as connected to the annular perimeter wall 6d.

Furthermore, the annular perimeter wall 6d can delimit an intermediate shoulder or step 6e, if desired annular, facing, in use, downwards and which defines with the lower edge of the bottom wall 6c the contact or engagement area with the first annular wall 3c or better with the respective second curved or straight length 3c2.

The term "annular" in this description refers to sections, lengths or parts that extend continuously across the entire perimeter of the sole 1.

Advantageously, the upper layer or insole 6 is made of polyurethane.

It can be understood that, in the case in which the upper layer or insole 6 is obtained by injection molding on or around the intermediate layer or midsole 3, the perimeter wall 6d is obtained in a single piece with the bottom portion 6c thanks to the configuration of the upper surface 3b of the intermediate layer or midsole 3.

According to the non-limiting embodiment illustrated in the figures, the upper layer or insole 6, at the front, is in uniform and direct support or in contact with the upper face 3b of the intermediate layer or midsole 3 and, at the rear, it is in uniform and direct support or in contact, at a respective intermediate zone, on the cushioning insert 5 and, at a perimeter or annular zone, on the intermediate layer or midsole 3.

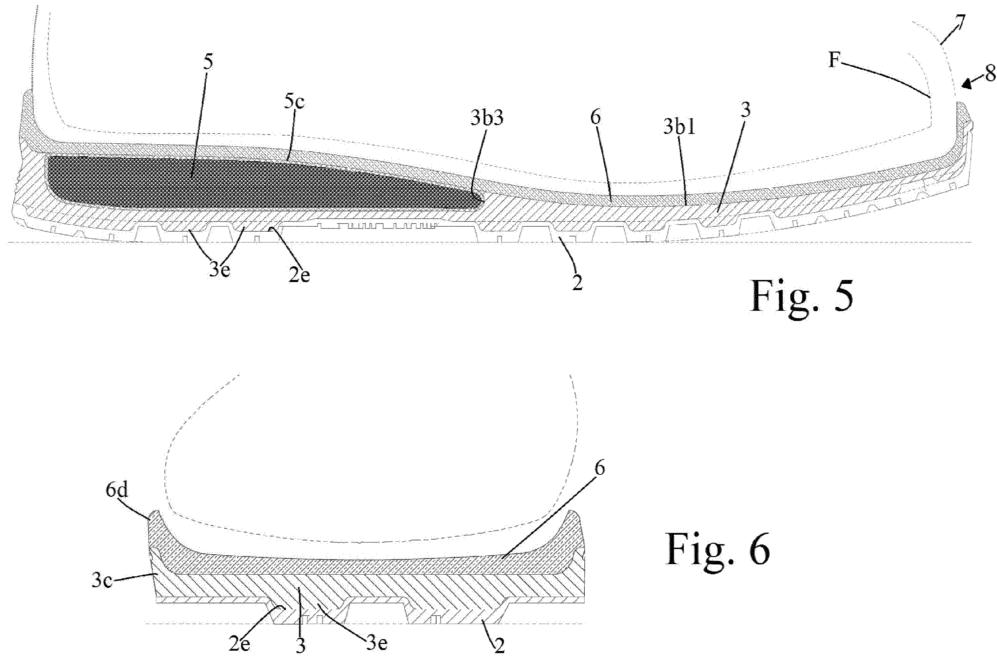

With reference to such an aspect, as visible in figure 5, the upper, in use, surface 5c of the at least one cushioning insert 5 is substantially aligned with the upper surface 3b of the intermediate layer or midsole 3, clearly in the zones thereof which do not define the first housing zone HZ1. Figure 4 shows the cross section of a non-limiting embodiment of the sole 1 with the trimming or elimination of the perimeter edge or flange 3c3.

However, as regards the lower or tread layer 2, it is preferably obtained by compression molding.

Preferably, the lower or tread layer 2 is made of vulcanized rubber so as to provide the sole 1 with high resistance to abrasion and traction as well as improved elasticity.

According to the non-limiting embodiment of the present invention shown in the figures, the lower or tread layer 2a has, at the tip of the sole 1, a protection portion 2d, extending upwards or in any case towards the intermediate layer or midsole 3, designed to protect the tip of the sole 1 from wear and abrasion.

As it is known, in fact, the tip of a sole is particularly, in use, exposed to the contact with the external environment and is among the first parts of the sole to wear.

In this regard, in the event that the intermediate layer or midsole 3 is molded on or around the lower or tread layer 2, the perimeter edge or flange 3c3, if present, will include a raised portion 3d at the tip of the sole 1, due to the presence of the protection portion 2d.

Subject-matter of the present invention is also a footwear 8, preferably for work, but also of another type, such as for example a sports, orthopedic, running, walking, trekking footwear, etc., which includes a sole 1 according to the present invention or according to non-limiting embodiments of the present invention, an upper layer or insole 6 and an upper 7 operatively connected with the upper layer or insole 6 of the sole 1. More particularly, the upper layer or insole 6 is advantageously injection molded between the intermediate layer or midsole 3 and the upper 7 so as to create a sole-to-upper constraint.

The upper 7 is, preferably, open or not open downwards and can be operationally connected, for example glued, sewn or molded to the sole 1, if desired at the upper, in use, end of the sole 1 or, more particularly, of the upper, in use, end of the perimeter wall 6d of the upper layer or insole 6.

Alternatively, the upper 7 could be operationally connected, for example glued, sewn or molded to the sole 1 at the lower, in use, end of the perimeter wall 6d of the upper layer or insole 6 or, alternatively, with the first annular wall 3c of the intermediate layer or midsole 3.

In the event that the footwear was a work footwear, the upper 7 or in any case the footwear could also include protection means, for example a reinforcing toe cap and/or an anti-puncture layer, if desired operationally connected to the upper layer or insole 6.

The present invention also concerns a mold 10 for obtaining a sole 1 for footwear, such as work footwear.

The mold 10 defines a housing seat HS for a lower or tread layer 2 and includes a first half-mold 12 and a second half-mold 13.

Advantageously, the mold 10 includes a first plate or base plate 11, a first half-mold 12 operationally associated or, in use, associable with the first plate or base plate 11 and a second half-mold 13 operationally associated or, in use, associable with the first plate or base plate 11.

In particular, the first plate or base plate 11, if provided, includes or delimits an upper, in use, surface 11a which defines a housing seat HS for a lower or tread layer 2 made of rubber of the sole 1, if desired already molded or, in any case, made separately.

So far as the first half-mold 12 and the second half-mold 13 are concerned, they are movable or displaceable between an opened operating configuration OC, in which they are moved away or spaced apart from each other and a closed operating configuration CC, in which they are mutually approached and abutted to each other so as to define, by means of respective lateral delimiting surfaces or portions 12b, 13b, a molding cavity MC for an intermediate layer or midsole 3 made of polyurethane of the sole 1.

Furthermore, the first half-mold 12 and/or the second half-mold 13 comprises or delimits, at a respective medial and/o rear, in use, portion of one of its lateral delimiting surfaces or portions 12b, 13b, at least one first shaped element 12a protruding towards the inside of the molding cavity MC, designed to generate one or more windows W on an intermediate layer or midsole 3 made of polyurethane of the sole 1.

As regards the first shaped element 12a, it could be fixed or in a single piece with one or both the half-molds 12, 13 or even movable so as to be protruding only during an operational molding step, but reinserted within the bulk of one or both half-molds 12, 13 during rest or extraction steps of the molded piece.

Advantageously, the mold 10 also includes a second plate or closure plate 14 which can be operationally associated, for example it can be abutted, to or on the first half-mold 12 and to or on the second half-mold 13 when the latter are in the closed operating configuration CC.

In this regard, the second plate or closure plate 14 includes or defines, at a medial and/or rear, in use, portion of a lower, in use, surface 14a thereof, a second shaped protruding element (not shown in the figures), designed to generate a first housing zone HZ1 for at least one cushioning insert 5 of the sole 1.

Preferably, first 12 and second half-mold 13 are mounted in a sliding manner with respect to each other, if desired on or with respect to the first plate or base plate 11 or on or with respect to the second plate or closure plate 14, for example on respective sliding guides included in or defined on the latter 11 or 14.

In this regard, the first 12 and second 13 half-mold can be displaced, for example automatically or manually by an operator, through a linear and/or rotary movement to pass from the opened operating configuration OC to the closed operating configuration CC and/or vice versa.

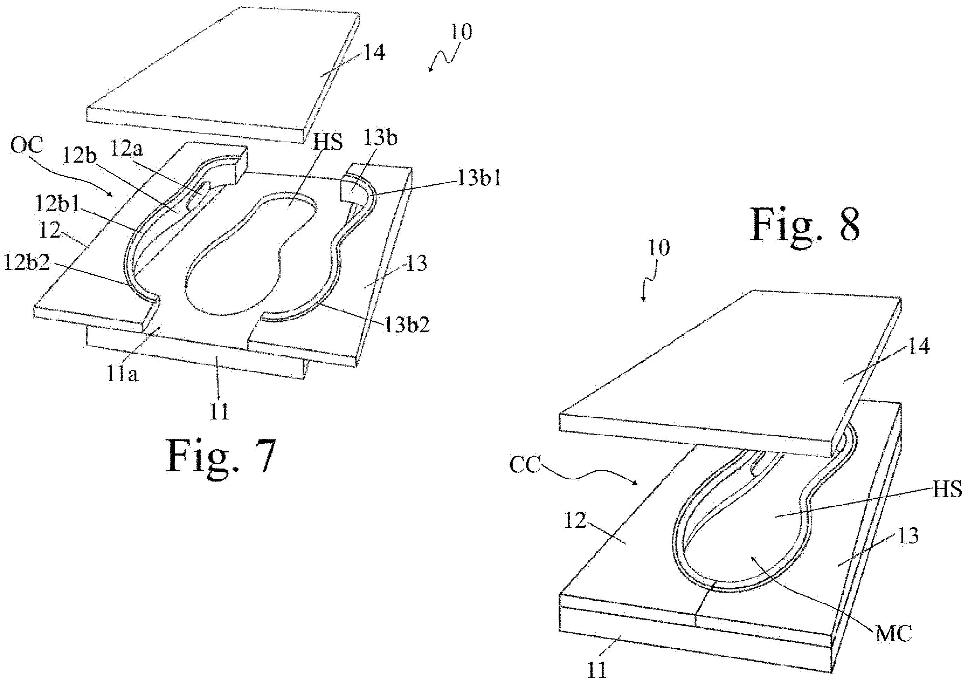

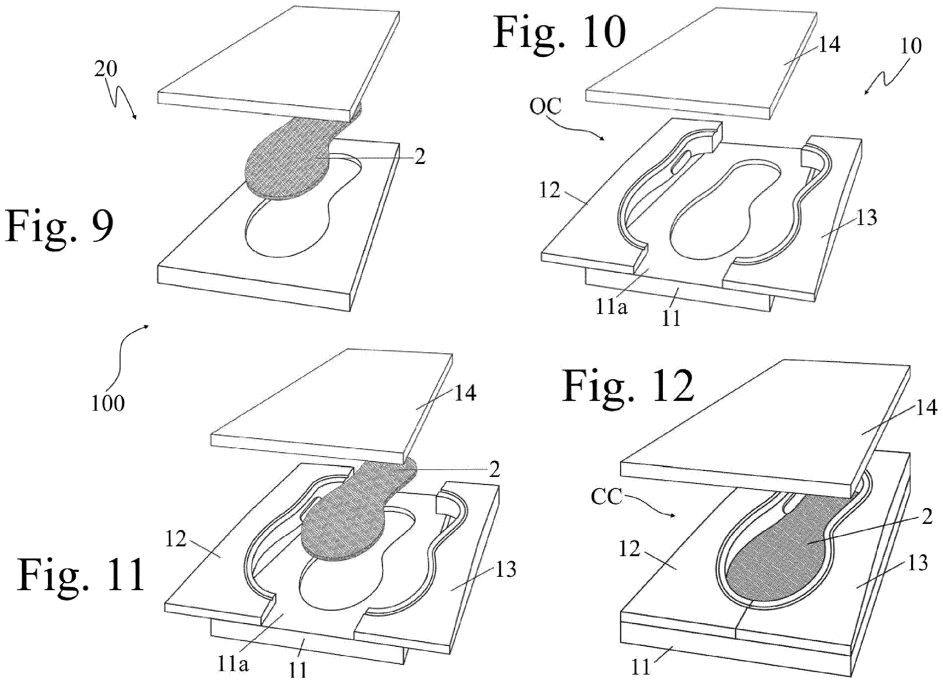

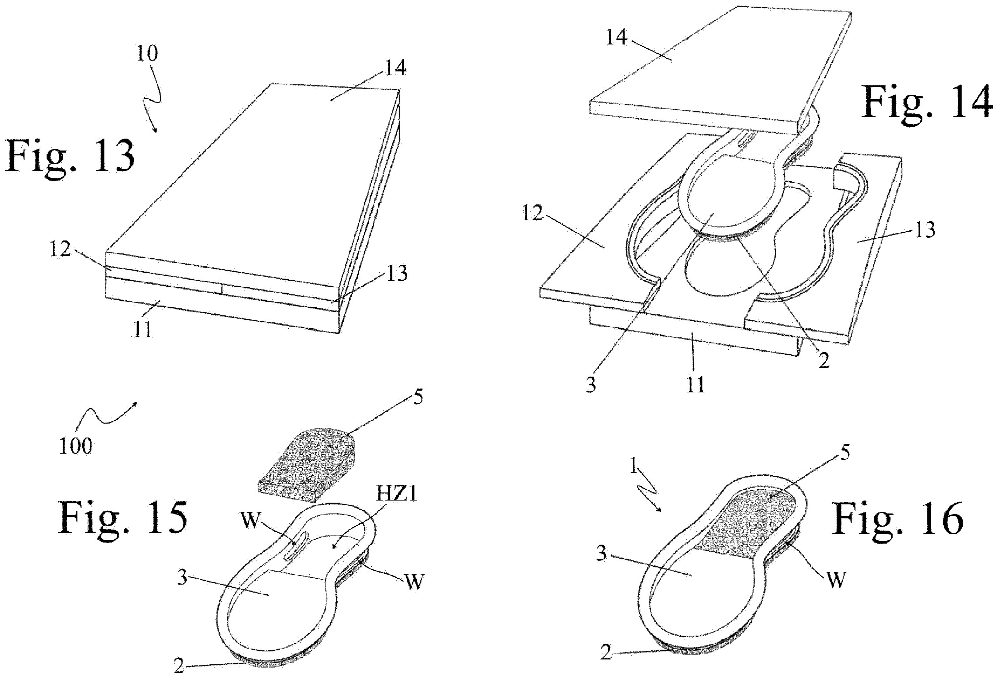

According to the non-limiting embodiment of the mold 10 shown in figures 7 and 8, the first 12 and the second 13 half-mold are mounted in a sliding manner on respective linear sliding guides (not shown in the figures) which define a sliding axis.

Advantageously, the mold 10 then includes or defines an insertion hole or opening (not visible in the figures) configured to allow the insertion, or preferably the injection, of polyurethane inside the molding cavity MC when first 12 and second half-mold 13 are in the closed operating configuration CC with the second plate or closure plate 14 abutting the latter.

Preferably, the first half-mold 12 and/or the second half-mold 13 then define, at the respective face facing towards the other between the second 13 and the first 12 half-mold, at least one lowered portion 12b1, 13b1, for example annular and such as to surround the molding cavity MC, opening towards this molding cavity MC and designed to create a perimeter edge or flange 3c3 of an intermediate layer or midsole 3 of the sole 1.

If desired, the first half-mold 12 and/or the second half-mold 13 can also define a channel 12b2, 13b2 of annular configuration, adjacent and such as to surround the respective lowered portion 12b1, 13b1 and distal with respect to the latter from the molding cavity MC, which channel 12b2, 13b2 is designed to generate a terminal length 3c4 of an intermediate layer or midsole 3 of the sole 1, extending from an end of the perimeter edge or flange 3c3, and, in use, facing downward or towards the ground.

From a functional point of view, it is therefore possible and advantageous to position the lower or tread layer 2 made of rubber, already molded, in the housing seat HS, bring the two half-molds 12, 13 closer or in abutment to define the molding cavity MC of an intermediate layer or midsole 3 made of polyurethane, close the thus defined molding cavity MC by bringing the second plate or closure plate 14 into abutment with the two half-molds 12, 13 in the closed operating configuration CC and, finally, insert or inject the polyurethane, through the insertion opening, into the molding cavity MC to obtain a footwear 1.

Of course, variants could be envisaged in which the first plate or base plate 11 and/or the second plate or closure plate 14 are not provided, for example by appropriately shaping the lateral delimiting surfaces or portions 12b, 13b of the half-molds 12, 13.

Subject-matter of the present invention is also a method 100 for obtaining a sole 1 for footwear, such as work footwear, but also of other types, such as for example sports, orthopedic, running, walking, trekking footwear, etc.

The method 100 according to the present invention initially includes the step of molding, by means of a first mold 20, a lower or tread layer 2 made of rubber, preferably vulcanized.

It is then provided the step of molding, by means of a second mold 10 according to the present invention or according to embodiments of the present invention, on or around the lower or tread layer 2, an intermediate layer or midsole 3 made of polyurethane with one or more windows W included or delimited at at least one first housing zone HZ1 open upwards defined or included in at least one rear portion or rearfoot zone 4c and/or in at least one intermediate portion or midfoot zone 4b of said intermediate layer or midsole 3.

Subsequently, the method 100 according to the present invention includes the step of providing at least one cushioning insert 5 and the step of operationally connecting, for example by gluing, the at least one cushioning insert 5 in the at least one first housing zone HZ1 included or defined on the intermediate layer or midsole 3 at the at least one of its rear portion or rearfoot zone 4c and/or at the at least one of its intermediate portion or midfoot zone 4b, so as to obtain a sole that can be moved as a single body or a single component for the subsequent constraint by molding to an upper in order to make a footwear.

Preferably, should a footwear be obtained, after the above indicated steps, an upper is prepared and then the step of molding an upper layer or insole 6 is provided, carried out by means of a third mold, on or around the intermediate layer or midsole 3, already molded on or around the lower or tread layer 2 and with the at least one cushioning insert 5 operatively connected in the at least one first housing zone HZ1.

Advantageously, the latter is injection molded between the intermediate layer or midsole 3 and the upper 7, so as to fill the space between them, so that the upper layer or insole 6 constitutes a constraint or connection layer between the sole and the upper.

Advantageously, the step of molding, by means of a first mold, a lower or tread layer 2 made of rubber, preferably vulcanized, can take place by compression molding.

Preferably, the step of molding, by means of a first mold, a lower or tread layer 2 made of rubber occurs by defining a plurality of recesses 2e open only upwards at the respective upper surface 2b of the lower or tread layer 2 which will be molded.

With reference to this aspect, the step of molding, by means of the first mold or by means of a second mold, on or around the lower or tread layer 2 can advantageously take place by defining portions 3e downwardly projecting, in a number equal to or less than the recesses 2e, if present, starting from the lower surface 3a of the intermediate layer or midsole 3.

In this case, each projecting portion 3e fills and therefore engages at least in part (for example, by at least 50%, 60%, 70% or 80%) and preferably entirely a respective recess 2e of the plurality of recesses 2e.

It can therefore be understood that, in this case, the molding of the intermediate layer or midsole 3 on or around the lower or tread layer 2 allows to obtain a highly solid and resistant engagement since the plurality of recesses 2e, defined by respective portions 2c downwardly projecting, are filled and therefore engaged at least partially by the polyurethane used to make the intermediate layer or midsole 3.

Furthermore, the step of molding, using a second mold 10 according to the present invention or according to embodiments of the present invention, on or around the lower or tread layer 2 takes place, preferably, by injection molding.

If desired, also the step of molding, by means of a third mold, on or around the intermediate layer or midsole 3 can also take place by injection molding.

Furthermore, this step of molding, by means of a third mold, on or around the intermediate layer or midsole 3 is advantageously carried out using a perimeter edge or flange 3c3 protruding outwards included in or delimited by the intermediate layer or midsole 3 as a sealing gasket for the respective mold for obtaining the upper layer or insole 6.

If desired, if there is a perimeter edge or flange 3c3 protruding outwards, following the step of molding, by means of a third mold, on or around the intermediate layer or midsole 3, the step of trimming or eliminating such perimeter edge or flange 3c3 protruding outwards can be provided.

Preferably, the step of providing includes initially the step of providing a first material or matrix, for example resin, if desired transparent or semi-transparent, and the step of providing a plurality of granule elements 5b, for example made of polyurethane.

After the above-mentioned steps of providing, if present, a step is foreseen of embedding the plurality of granule elements 5b in the first material or matrix and the step of forming a main body 5a for the at least one cushioning insert 5 which includes the plurality of granule elements 5b embedded in the first material or matrix.

As it will be understood, the method 100 according to the present invention allows a highly resistant and highly comfortable sole 1 to be obtained for a user's foot in a simple, fast and reliable way.

Furthermore, the method 100 and the mold 10 according to the present invention make it possible to obtain a sole 1 which includes an assembly that can be used or moved separately which includes a lower or tread layer 2 made of rubber connected to an intermediate layer or midsole 3 made of polyurethane with one or more windows W and a cushioning insert 5 housed in a first housing zone HZ1 defined on the intermediate layer or midsole 3.

Typically, this is not possible with the methods and/or molds provided by the state of the art since should a lower or tread layer made of rubber and an intermediate layer or midsole made of polyurethane be made, it would be necessary to carry out a molding on the upper for the rubber/polyurethane coupling with the cushioning insert already inserted which prevents or in any case hinders the obtainment of the windows.

Furthermore, the method 100 according to the present invention allows to obtain a sole 1 whose cushioning is highly customizable depending on the dimensions and thickness of the at least one cushioning insert 5.

The sole 1 according to the present invention ensures a high level of comfort to the user's foot even if used continuously for many hours, thanks to the effective and particular configuration and construction of the cushioning insert 5.

The sole 1 according to the present invention is both simple and economical to make.

Furthermore, the sole 1 according to the present invention is able to combine the properties of high elasticity and tensile strength of the lower or tread layer 2 made of rubber, preferably vulcanized, with the high level of versatility and comfort of the intermediate layer or midsole 3 made of polyurethane and with the particular configuration and construction of the cushioning insert 5.

Furthermore, it should be taken into account that the sole 1 according to the present invention combines, preferably by molding, for example by injection molding, a lower or tread layer 2 made of rubber, which has excellent properties of elasticity and resistance to traction and abrasion with an intermediate layer or midsole 3 made of polyurethane, which is light, sturdy, highly resistant to high temperatures and to most chemical and biological agents, such as solvents, paints, bituminous materials, sealants, plasticizers, mineral oils, acids and diluted alkalis and aggressive industrial atmospheres.

As it can be understood, this aspect is even more important in the case in which the sole 1 is used as the sole for a work footwear, as the latter is typically used in hypothetically dangerous operating environments.

It has thus been seen how the invention fully achieves the proposed objectives.

Modifications and variations of the invention are possible within the scope of protection defined by the claims.

## Claims

1. Sole (1) for footwear, such as for example work, sports, orthopedic, running, walking or trekking footwear, comprising:
- a lower or tread layer (2), made of rubber, which comprises or delimits a lower surface (2a) designed, in use, to enter in contact at least partially with the external environment or with the ground and an upper surface (2b) opposite to said lower surface (2a),
- an intermediate layer or midsole (3), made of polyurethane molded on or around said lower or tread layer (2), which comprises or defines a lower surface (3a) operatively connected with said upper surface (2b) of said lower or tread layer (2) and an upper surface (3b) opposite to said lower surface (3a), said intermediate layer or midsole (3) comprising or delimiting a front portion or forefoot zone (4a), an intermediate portion or midfoot zone (4b), a rear portion or rearfoot zone (4c), at least one first housing zone (HZ1) open upwards defined or included in at least said rear portion or rearfoot zone (4c) and/or in at least said intermediate portion or midfoot zone (4b), said intermediate layer or midsole (3) delimiting one or more through windows (W) at said at least one first housing zone (HZ1), and
- at least one cushioning insert (5), housed at least partially in said at least one first housing zone (HZ1), elastically yielding and compressible under the weight of the user,
said one or more windows (W) being designed to allow viewing, from the outside of said sole, said at least one cushioning insert (5) housed at least partially in said at least one first housing zone (HZ1).

2. Sole (1) according to claim 1, said sole being movable as a single body or a single component for subsequent constraint by molding to an upper in order to make a footwear.

3. Sole (1) according to claim 1 or 2, wherein said at least one cushioning insert (5) comprises a main body (5a) made of a first material or matrix and a plurality of granule elements (5b) embedded in said first material or matrix of said main body (5a).

4. Sole (1) according to the preceding claim, wherein said first material or matrix is resin, while said plurality of granule elements (5b) are made of polyurethane.

5. Sole (1) according to claim 3 or 4, wherein each granule element (5b) of said plurality of granule elements (5b) is in contact with at least one other granule element (5b) or has a distance equal to or less than 2 mm with at least one other granule element (5b) more proximal to it.

6. Sole (1) according to any one of the preceding claims, wherein said at least one cushioning insert (5) protrudes upwards with respect to said at least one first housing zone (HZ1) so as to allow better cushioning sensitivity for the user's foot and/or is housed substantially to measure in said at least one first housing zone (HZ1).

7. Sole (1) according to any one of the preceding claims, wherein said at least one cushioning insert (5) has a thickness decreasing with reference to one of its first end (E1) proximal to said rear portion or rearfoot zone (4c) towards one of its second end (E2) proximal to said intermediate portion or midfoot zone (4b) or to said front portion or forefoot zone (4a).

8. Sole (1) according to the preceding claim, wherein said lower or tread layer (2) defines a plurality of recesses (2e) open only upwards at the respective upper surface (2b), while said intermediate layer or midsole (3) has respective portions (3e) downwardly projecting starting from said lower surface (3a) of said intermediate layer or midsole (3), each of said projecting portions (3e) filling and thus engaging at least in part a respective recess (2e) of said plurality of recesses (2e).

9. Sole (1) according to claim 8, wherein each of said recesses (2e) is defined by a downward protruding portion (2c) of said lower or tread layer (2), which protruding portion (2c) defines a respective cleat of said sole (1).

10. Footwear comprising a sole (1) according to any one of the preceding claims comprising an upper layer or insole (6) which includes or delimits a lower surface (6a), operatively connected with said intermediate layer or midsole (3) and an upper surface (6b), opposite to said lower surface (6a), said upper layer (6) being designed to close said at least one first housing zone (HZ1) at the top,
said footwear further comprising an upper (7) operatively connected to said upper layer or insole (6) of said sole (1).

11. Footwear (1) according to claim 10, wherein said intermediate layer or midsole (3) has a base wall (3ab) as well as a first annular wall (3c) rising, in use, upwards from the outer edge of said base wall (3ab), said first annular wall (3c) being partially wound and abutted as well as connected to said upper layer (6).

12. Footwear (1) according to claim 11, wherein said upper layer or insole (6) comprises a bottom portion (6c) and an annular perimeter wall (6d) extending upwards from the perimeter edge of said bottom portion (6c), said first annular wall (3c) of said intermediate layer or midsole (3) being wound and abutted as well as connected to said annular perimeter wall (6d) of said upper layer (6).

13. Footwear (1) according to any one of claims 10 to 12, wherein said upper layer or insole (6) is injection molded between said intermediate layer or midsole (3) and said upper (7) so as to provide a constraint between sole and upper.

14. Mold (10) for obtaining a sole (1), according to any one of claims 1 to 9, for footwear, such as for example work, sports, orthopedic, running, walking or trekking footwear, said mold defining a housing seat (HS) for a lower or tread layer (2) and comprising a first half-mold (12) and a second half-mold (13), said first half-mold (12) and said second half-mold (13) being movable or displaceable with respect to each other between an opened operating configuration (OC) in which they are moved apart or spaced apart from each other and a closed operating configuration (CC) in which they are approached and abutting each other so as to define by means of respective lateral delimiting portions or surfaces (12b, 13b) a molding cavity (MC) for an intermediate layer or midsole (3) of said sole (1), said first half-mold (12) and/or said second half-mold (13) comprising or delimiting, at a respective medial and/or rear, in use, portion of said lateral delimiting portion or surface (12b, 13b), at least one first shaped element (12a) protruding towards the inside of said molding cavity (MC) and designed to make one or more windows (W) on an intermediate layer or midsole (3) of said sole (1).

15. Mold (10) according to claim 14, comprising:
- a first plate or base plate (11) which comprises or delimits an upper, in use, surface (11a) which defines said housing seat (HS) for a lower or tread layer (2) of said sole (1),
- said first half-mold (12) and said second half-mold (13) being operatively associated or, in use, associable with said first plate or base plate (11),
- a second plate or closure plate (14) operatively associable with or on said first half-mold (12) and with or on said second half-mold (13) when the latter are in said closed operating configuration (CC),
said first plate or base plate (11) or said second plate or closure plate (14) comprising or defining, at a medial and/or rear, in use, portion of a lower, in use, surface thereof (14a), a second shaped protruding element designed to form a first housing zone (HZ1) for at least one cushioning insert (5) of said sole (1).

16. Method (100) of obtaining a sole (1) for footwear, such as for example work, sports, orthopedic, running, walking or trekking footwear, comprising the steps of:
- molding, by means of a first mold (20), a lower or tread layer (2) of rubber,
- molding, by means of a second mold (10) according to claim 14 or 15 on or around said lower or tread layer (2) an intermediate layer or midsole (3) of polyurethane with one or more windows (W) included or delimited at at least one first housing zone (HZ1) open upwards defined or included in at least one rear portion or rearfoot zone (4c) and/or in at least an intermediate portion or midfoot zone (4b) of said intermediate layer or midsole (3),
- providing at least one cushioning insert (5), and
- operatively connecting said at least one cushioning insert (5) in said at least one first housing zone (HZ1) comprised or defined on said intermediate layer or midsole (3) at said at least one of its rear portion or rearfoot zone (4c) and/or of said at least one of its intermediate portion or midfoot zone (4b),
so as to obtain a sole movable as a single body or a single component for the subsequent constraint by molding to an upper in order to make a footwear.

17. Method (100) for obtaining a footwear initially comprising the steps of the method according to claim 16, then the step of preparing an upper and then the step of molding, by means of a third mold, on or around said intermediate layer or midsole (3), already molded on or around said lower or tread layer (2) and with said at least one cushioning insert (5) operatively connected in said at least one first housing zone (HZ1), an upper layer or insole (6), the latter being injection molded between said intermediate layer or midsole (3) and said upper (7), so as to fill the space between them, so that said upper layer or insole (6) constitutes a constraint or connection layer between the sole and the upper.

18. Method (100) according to claim 16 or 17, wherein said step of providing comprises the steps of:
- providing a first material or matrix,
- providing a plurality of granule elements (5b),
- embedding said plurality of granule elements (5b) in said first material or matrix,
- forming a main body (5a) for said at least one cushioning insert (5) which comprises said plurality of granule elements (5b) embedded in said first material or matrix.

## Patentansprüche

1. Sohle (1) für Schuhwerk, wie zum Beispiel Arbeits-, Sport-, Orthopädie-, Lauf-, Wander- oder Trekking-Schuhwerk, umfassend:
- eine Unter- oder Laufflächenschicht (2), aus Gummi, die eine untere Oberfläche (2a) umfasst oder begrenzt, die, im Gebrauch, dazu ausgelegt ist, mindestens teilweise mit der äußeren Umgebung oder mit dem Boden und einer oberen Oberfläche (2b), die der besagten unteren Oberfläche (2a) gegenüberliegt, in Kontakt zu kommen,
- eine Zwischenschicht oder Mittelsohle (3), aus Polyurethan, die auf oder um die besagte untere oder Laufflächenschicht (2) herum geformt ist, die eine untere Oberfläche (3a), die mit der besagten oberen Oberfläche (2b) der besagten unteren oder Laufflächenschicht (2) wirksam verbunden ist, und eine obere Oberfläche (3b), die der besagten unteren Oberfläche (3a) gegenüberliegt, umfasst oder definiert, die besagte Zwischenschicht oder Mittelsohle (3) umfassend oder begrenzend einen vorderen Abschnitt oder Vorderfußbereich (4a), einen Zwischenabschnitt oder Mittelfußbereich (4b), einen hinteren Abschnitt oder Rückfußbereich (4c), mindestens einen nach oben offenen ersten Aufnahmebereich (HZ1), der in mindestens dem besagten hinteren Abschnitt oder Rückfußbereich (4c) und/oder in mindestens dem besagten Zwischenabschnitt oder Mittelfußbereich (4b) definiert oder enthalten ist, wobei die besagte Zwischenschicht oder Mittelsohle (3) ein oder mehrere Durchgangsfenster (W) an dem besagten mindestens einen ersten Aufnahmebereich (HZ1) begrenzt, und
- mindestens einen Dämpfungseinsatz (5), der mindestens teilweise in dem besagten mindestens einen ersten Aufnahmebereich (HZ1) untergebracht ist, elastisch nachgibt und unter dem Gewicht des Benutzers komprimierbar ist,
wobei das besagte eine oder die besagten mehreren Fenster (W) so ausgelegt ist/sind, dass von der Außenseite der besagten Sohle aus die Sicht auf den besagten mindestens einen Dämpfungseinsatz (5), der mindestens teilweise in dem besagten mindestens einen ersten Aufnahmebereich (HZ1) untergebracht ist, ermöglicht wird.

2. Sohle (1) nach Anspruch 1, wobei die besagte Sohle als ein einzelner Körper oder als eine einzelne Komponente bewegbar ist, um anschließend durch Formung an ein Obermaterial befestigt zu werden, um ein Schuhwerk herzustellen.

3. Sohle (1) nach Anspruch 1 oder 2, worin der besagte mindestens eine Dämpfungseinsatz (5) einen Hauptkörper (5a), der aus einem ersten Material oder einer Matrix besteht, und eine Vielzahl von Granulatelementen (5b), die in das besagte erste Material oder in die besagte Matrix des besagten Hauptkörpers (5a) eingebettet sind, umfasst.

4. Sohle (1) nach dem vorangegangenen Anspruch, worin das besagte erste Material oder die besagte Matrix aus Harz besteht, während die besagte Vielzahl von Granulatelementen (5b) aus Polyurethan besteht.

5. Sohle (1) nach Anspruch 3 oder 4, worin jedes Granulatelement (5b) der besagten Vielzahl von Granulatelementen (5b) mit mindestens einem anderen Granulatelement (5b) in Kontakt steht oder einen Abstand aufweist, der gleich oder kleiner als 2 mm zu mindestens einem anderen Granulatelement (5b), das näher dazu liegt, ist.

6. Sohle (1) nach irgendeinem der vorangegangenen Ansprüche, worin der besagte mindestens eine Dämpfungseinsatz (5) in Bezug auf den besagten mindestens einen ersten Aufnahmebereich (HZ1) nach oben vorsteht, um eine bessere Dämpfungsempfindlichkeit für den Fuß des Benutzers zu ermöglichen, und/oder im Wesentlichen auf Maß in dem besagten mindestens einen ersten Aufnahmebereich (HZ1) untergebracht ist.

7. Sohle (1) nach irgendeinem der vorangegangenen Ansprüche, worin der besagte mindestens eine Dämpfungseinsatz (5) eine Dicke aufweist, die bezugnehmend auf eines seiner ersten Enden (E1) proximal zu dem besagten hinteren Abschnitt oder Rückfußbereich (4c) in Richtung eines seiner zweiten Enden (E2) proximal zu dem besagten mittleren Abschnitt oder Mittelfußbereich (4b) oder zu dem besagten vorderen Abschnitt oder Vorderfußbereich (4a) abnimmt.

8. Sohle (1) nach dem vorangegangenen Anspruch, worin die besagte untere oder Laufflächenschicht (2) eine Vielzahl von Aussparungen (2e) definiert, die an der jeweiligen oberen Oberfläche (2b) nur nach oben offen sind, während die besagte Zwischenschicht oder Mittelsohle (3) jeweilige Abschnitte (3e) aufweist, die von der besagten unteren Oberfläche (3a) der besagten Zwischenschicht oder Mittelsohle (3) ausgehend nach unten vorstehen, wobei jeder der besagten vorstehenden Abschnitte (3e) eine jeweilige Aussparung (2e) aus der besagten Vielzahl von Aussparungen (2e) ausfüllt und somit mindestens teilweise in diese eingreift.

9. Sohle (1) nach Anspruch 8, worin jede der besagten Aussparungen (2e) durch einen nach unten vorstehenden Abschnitt (2c) der besagten unteren oder Laufflächenschicht (2) definiert ist, wobei dieser vorstehende Abschnitt (2c) einen jeweiligen Stollen der besagten Sohle (1) definiert.

10. Schuhwerk, umfassend eine Sohle (1) nach irgendeinem der vorangegangenen Ansprüche, umfassend eine obere Schicht oder Innensohle (6), die eine untere Oberfläche (6a), die mit der besagten Zwischenschicht oder Mittelsohle (3) wirksam verbunden ist, und eine obere Oberfläche (6b), die der besagten unteren Oberfläche (6a) gegenüberliegt, enthält oder begrenzt, wobei die besagte obere Schicht (6) so ausgelegt ist, dass sie den besagten mindestens einen ersten Aufnahmebereich (HZ1) ganz oben verschließt,
wobei das besagte Schuhwerk ferner ein Obermaterial (7) umfasst, das mit der besagten oberen Schicht oder Innensohle (6) der besagten Sohle (1) wirksam verbunden ist.

11. Schuhwerk (1) nach Anspruch 10, worin die besagte Zwischenschicht oder Mittelsohle (3) eine Basiswand (3ab) sowie eine erste ringförmige Wand (3c) aufweist, die, im Gebrauch, vom Außenrand der besagten Basiswand (3ab) nach oben ansteigt, wobei die besagte erste ringförmige Wand (3c) teilweise um die besagte obere Schicht (6) gewickelt ist und an diese anliegt sowie mit ihr verbunden ist.

12. Schuhwerk (1) nach Anspruch 11, worin die besagte obere Schicht oder Innensohle (6) einen Bodenabschnitt (6c) und eine ringförmige Umfangswand (6d) umfasst, die sich vom Umfangsrand des besagten Bodenabschnitts (6c) nach oben erstreckt, wobei die besagte erste ringförmige Wand (3c) der besagten Zwischenschicht oder Mittelsohle (3) um die besagte ringförmige Umfangswand (6d) der besagten oberen Schicht (6) gewickelt ist und an diese anliegt sowie mit ihr verbunden ist.

13. Schuhwerk (1) nach irgendeinem der Ansprüche 10 bis 12, worin die besagte obere Schicht oder Innensohle (6) zwischen der besagten Zwischenschicht oder Mittelsohle (3) und dem besagten Obermaterial (7) spritzgegossen ist, um eine Befestigung zwischen Sohle und Obermaterial bereitzustellen.

14. Form (10) zum Erhalten einer Sohle (1), nach irgendeinem der Ansprüche 1 bis 9, für Schuhwerk, wie zum Beispiel Arbeits-, Sport-, Orthopädie-, Lauf-, Wander- oder Trekking-Schuhwerk, wobei die besagte Form einen Aufnahmesitz (HS) für eine untere oder Laufflächenschicht (2) definiert und eine erste Halbform (12) und eine zweite Halbform (13) umfasst, wobei die besagte erste Halbform (12) und die besagte zweite Halbform (13) in Bezug aufeinander bewegbar oder verschiebbar sind zwischen einer geöffneten Betriebskonfiguration (OC), in der sie voneinander wegbewegt oder beabstandet sind, und einer geschlossenen Betriebskonfiguration (CC), in der sie aneinander herangeführt sind und aneinander anliegen, um mittels jeweiliger seitlicher Begrenzungsabschnitte oder Oberflächen (12b, 13b) einen Formhohlraum (MC) für eine Zwischenschicht oder Mittelsohle (3) der besagten Sohle (1) zu definieren, wobei die besagte erste Halbform (12) und/oder die besagte zweite Halbform (13), im Gebrauch, an einem jeweiligen mittleren und/oder hinteren Abschnitt des besagten seitlichen Begrenzungsabschnitts oder der besagten seitlichen Oberfläche (12b, 13b) mindestens ein erstes geformtes Element (12a) umfassen oder begrenzen, das in das Innere des besagten Formhohlraums (MC) vorsteht und dazu ausgelegt ist, ein oder mehrere Fenster (W) an einer Zwischenschicht oder Mittelsohle (3) der besagten Sohle (1) zu bilden.

15. Form (10) nach Anspruch 14, umfassend:
- eine erste Platte oder Basisplatte (11), die eine, im Gebrauch, obere Oberfläche (11a) umfasst oder begrenzt, die den besagten Aufnahmesitz (HS) für eine untere oder Laufflächenschicht (2) der besagten Sohle (1) definiert,
- wobei die besagte erste Halbform (12) und die besagte zweite Halbform (13) der besagten ersten Platte oder Basisplatte (11) wirksam verbunden sind oder, im Gebrauch, mit dieser verbindbar sind,
- eine zweite Platte oder Verschlussplatte (14), die mit oder an der besagten ersten Halbform (12) und mit oder an der besagten zweiten Halbform (13) wirksam verbindbar ist, wenn sich die letzteren in der besagten geschlossenen Betriebskonfiguration (CC) befinden, wobei die besagte erste Platte oder Basisplatte (11) oder die besagte zweite Platte oder Verschlussplatte (14), an einem, im Gebrauch, mittleren und/oder hinteren Abschnitt einer, im Gebrauch, unteren Oberfläche (14a) davon, ein zweites geformtes vorstehendes Element umfasst oder definiert, das dazu ausgelegt ist, einen ersten Aufnahmebereich (HZ1) für mindestens einen Dämpfungseinsatz (5) der besagten Sohle (1) zu bilden.

16. Verfahren (100) zum Erhalten einer Sohle (1) für Schuhwerk, wie zum Beispiel Arbeits-, Sport-, Orthopädie-, Lauf-, Wander- oder Trekking-Schuhwerk, umfassend die Schritte des:
- Formens, mittels einer ersten Form (20), einer unteren oder Laufflächenschicht (2) aus Gummi,
- Formens, mittels einer zweiten Form (10) nach Anspruch 14 oder 15, an oder um die besagte untere oder Laufflächenschicht (2) herum, einer Zwischenschicht oder Mittelsohle (3) aus Polyurethan mit einem oder mehreren Fenstern (W), die an mindestens einem nach oben offenen ersten Aufnahmebereich (HZ1) enthalten oder begrenzt sind, der in mindestens einem hinteren Abschnitt oder Rückfußbereich (4c) und/oder in mindestens einem mittleren Abschnitt oder Mittelfußbereich (4b) der besagten Zwischenschicht oder Mittelsohle (3) definiert oder enthalten ist,
- Bereitstellens mindestens eines Dämpfungseinsatzes (5), und
- wirksamen Verbindens des besagten mindestens einen Dämpfungseinsatzes (5) in dem besagten mindestens einen ersten Aufnahmebereich (HZ1), der an der besagten Zwischenschicht oder Mittelsohle (3) an ihrem besagten mindestens einen hinteren Abschnitt oder Rückfußbereich (4c) und/oder an ihrem besagten mindestens einen mittleren Abschnitt oder Mittelfußbereich (4b) umfasst oder definiert ist,
um eine Sohle zu erhalten, die als ein einzelner Körper oder als eine einzelne Komponente bewegbar ist, um anschließend durch Formung an ein Obermaterial befestigt zu werden, um ein Schuhwerk herzustellen.

17. Verfahren (100) zum Erhalten eines Schuhwerks, anfänglich umfassend die Schritte des Verfahrens nach Anspruch 16, dann den Schritt des Vorbereitens eines Obermaterials und dann den Schritt des Formens, mittels einer dritten Form, an oder um die besagte Zwischenschicht oder Mittelsohle (3) herum, die bereits an oder um die besagte untere oder Laufflächenschicht (2) herum geformt ist und mit dem besagten mindestens einen Dämpfungseinsatz (5) in dem besagten mindestens einen ersten Aufnahmebereich (HZ1) wirksam verbunden ist, einer oberen Schicht oder Innensohle (6), wobei letztere zwischen der besagten Zwischenschicht oder Mittelsohle (3) und dem besagten Obermaterial (7) spritzgegossen wird, um den Raum zwischen ihnen auszufüllen, so dass die besagte obere Schicht oder Innensohle (6) eine Befestigung oder Verbindungsschicht zwischen der Sohle und dem Obermaterial bildet.

18. Verfahren (100) nach Anspruch 16 oder 17, worin der besagte Schritt des Bereitstellens die Schritte umfasst des:
- Bereitstellens eines ersten Materials oder einer Matrix,
- Bereitstellens einer Vielzahl von Granulatelementen (5b),
- Einbettens der besagten Vielzahl von Granulatelementen (5b) in das besagte erste Material oder in die besagte erste Matrix,
- Formens eines Hauptkörpers (5a) für den besagten mindestens einen Dämpfungseinsatz (5), der die besagte Vielzahl von Granulatelementen (5b) umfasst, die in das besagte erste Material oder in die besagte erste Matrix eingebettet sind.

## Revendications

1. Semelle (1) pour chaussure, telle que par exemple la chaussure de travail, de sport, orthopédique, de course, de marche ou de randonnée, comprenant :
- une couche inférieure ou de roulement (2), en caoutchouc, qui comprend ou délimite une surface inférieure (2a) conçue, pendant l'utilisation, pour entrer en contact au moins partiellement avec l'environnement extérieur ou avec le sol et une surface supérieure (2b) opposée à ladite surface inférieure (2a),
- une couche intermédiaire ou semelle intercalaire (3), en polyuréthane moulée sur ou autour de ladite couche inférieure ou de roulement (2), qui comprend ou définit une surface inférieure (3a) reliée de manière opérationnelle à ladite surface supérieure (2b) de ladite couche inférieure ou de roulement (2) et une surface supérieure (3b) opposée à ladite surface inférieure (3a), ladite couche intermédiaire ou semelle intercalaire (3) comprenant ou délimitant une portion avant ou zone de l'avant-pied (4a), une portion intermédiaire ou zone du médio-pied (4b), une portion arrière ou zone de l'arrière-pied (4c), au moins une première zone de logement (HZ1) ouverte vers le haut définie ou incluse dans au moins ladite portion arrière ou zone de l'arrière-pied (4c) et/ou dans au moins ladite portion intermédiaire ou zone du médio-pied (4b), ladite couche intermédiaire ou semelle intercalaire (3) délimitant une ou plusieurs fenêtres traversantes (W) dans ladite au moins une première zone de logement (HZ1), et
- au moins un insert d'amortissement (5), logé au moins partiellement dans ladite au moins une première zone de logement (HZ1), élastiquement souple et compressible sous le poids de l'utilisateur,
ladite une ou plusieurs fenêtres (W) étant conçues pour permettre la vue, de l'extérieur de ladite semelle, ledit au moins un insert d'amortissement (5) logé au moins partiellement dans ladite au moins une première zone de logement (HZ1).

2. Semelle (1) selon la revendication 1, ladite semelle étant mobile comme un corps unique ou un composant unique pour la contrainte ultérieure par moulage à une tige afin de fabriquer une chaussure.

3. Semelle (1) selon la revendication 1 ou 2, dans laquelle ledit au moins un insert d'amortissement (5) comprend un corps principal (5a) constitué d'un premier matériau ou matrice et une pluralité d'éléments granulaires (5b) incorporés dans ledit premier matériau ou matrice dudit corps principal (5a).

4. Semelle (1) selon la revendication précédente, dans laquelle ledit premier matériau ou matrice est la résine, tandis que ladite pluralité d'éléments granulaires (5b) sont en polyuréthane.

5. Semelle (1) selon la revendication 3 ou 4, dans laquelle chaque élément granulaire (5b) de ladite pluralité d'éléments granulaires (5b) est en contact avec au moins un autre élément granulaire (5b) ou présente une distance égale ou inférieure à 2 mm avec au moins un autre élément granulaire (5b) plus proximal à celui-ci.

6. Semelle (1) selon l'une quelconque des revendications précédentes, dans laquelle ledit au moins un insert d'amortissement (5) fait saillie vers le haut par rapport à ladite au moins une première zone de logement (HZ1) afin de permettre une meilleure sensibilité d'amortissement pour le pied de l'utilisateur et/ou est logé de manière sensiblement sur mesure dans ladite au moins une première zone de logement (HZ1).

7. Semelle (1) selon l'une quelconque des revendications précédentes, dans laquelle ledit au moins un insert d'amortissement (5) présente une épaisseur diminuant en référence à l'une de ses premières extrémités (E1) proximales à ladite portion arrière ou zone de l'arrière-pied (4c) vers l'une de ses deuxièmes extrémités (E2) proximales à ladite portion intermédiaire ou zone du médio-pied (4b) ou à ladite portion avant ou zone de l'avant-pied (4a).

8. Semelle (1) selon la revendication précédente, dans laquelle ladite couche inférieure ou de roulement (2) définit une pluralité de renfoncements (2e) ouverts uniquement vers le haut au niveau de la surface supérieure respective (2b), tandis que ladite couche intermédiaire ou semelle intercalaire (3) présente des portions respectives (3e) faisant saillie vers le bas à partir de ladite surface inférieure (3a) de ladite couche intermédiaire ou semelle intercalaire (3), chacune de ces portions saillantes (3e) remplissant et s'engageant ainsi au moins en partie dans un renfoncement respectif (2e) de ladite pluralité de renfoncements (2e).

9. Semelle (1) selon la revendication 8, dans laquelle chacun desdits renfoncements (2e) est défini par une portion saillante vers le bas (2c) de ladite couche inférieure ou de roulement (2), laquelle portion saillante (2c) définit un crampon respectif de ladite semelle (1).

10. Chaussure comprenant une semelle (1) selon l'une quelconque des revendications précédentes comprenant une couche supérieure ou semelle intérieure (6) qui inclut ou délimite une surface inférieure (6a), reliée de manière opérationnelle à ladite couche intermédiaire ou semelle intercalaire (3) et une surface supérieure (6b), opposée à ladite surface inférieure (6a), ladite couche supérieure (6) étant conçue pour fermer ladite au moins une première zone de logement (HZ1) en haut, ladite chaussure comprenant en outre une tige (7) reliée de manière opérationnelle à ladite couche supérieure ou semelle intérieure (6) de ladite semelle (1).

11. Chaussure (1) selon la revendication 10, dans laquelle ladite couche intermédiaire ou semelle intercalaire (3) présente une paroi de base (3ab) ainsi qu'une première paroi annulaire (3c) s'élevant, pendant l'utilisation, vers le haut à partir du bord extérieur de ladite paroi de base (3ab), ladite première paroi annulaire (3c) étant partiellement enroulée et en butée ainsi que reliée à ladite couche supérieure (6).

12. Chaussure (1) selon la revendication 11, dans laquelle ladite couche supérieure ou semelle intérieure (6) comprend une portion inférieure (6c) et une paroi périmétrique annulaire (6d) s'étendant vers le haut à partir du bord périmétrique de ladite portion inférieure (6c), ladite première paroi annulaire (3c) de ladite couche intermédiaire ou semelle intercalaire (3) étant enroulée et en butée ainsi que reliée à ladite paroi périmétrique annulaire (6d) de ladite couche supérieure (6).

13. Chaussure (1) selon l'une quelconque des revendications 10 à 12, dans laquelle ladite couche supérieure ou semelle intérieure (6) est moulée par injection entre ladite couche intermédiaire ou semelle intercalaire (3) et ladite tige (7) afin de fournir une contrainte entre la semelle et la tige.

14. Moule (10) permettant d'obtenir une semelle (1), selon l'une quelconque des revendications 1 à 9, pour chaussure, telle que par exemple la chaussure de travail, de sport, orthopédique, de course, de marche ou de randonnée, ledit moule définissant un siège de logement (HS) pour une couche inférieure ou de roulement (2) et comprenant un premier demi-moule (12) et un deuxième demi-moule (13), ledit premier demi-moule (12) et ledit deuxième demi-moule (13) étant mobiles ou déplaçables l'un par rapport à l'autre entre une configuration opérationnelle ouverte (OC) dans laquelle ils sont écartés ou espacés l'un de l'autre et une configuration opérationnelle fermée (CC) dans laquelle ils sont rapprochés et en butée l'un avec l'autre afin de définir au moyen de portions ou surfaces de délimitation latérales respectives (12b, 13b) une cavité de moulage (MC) pour une couche intermédiaire ou semelle intercalaire (3) de ladite semelle (1), ledit premier demi-moule (12) et/ou ledit deuxième demi-moule (13) comprenant ou délimitant, au niveau d'une portion médiale et/ou arrière respective, pendant l'utilisation, de ladite portion ou surface de délimitation latérale (12b, 13b), au moins un premier élément profilé (12a) faisant saillie vers l'intérieur de ladite cavité de moulage (MC) et conçu pour créer une ou plusieurs fenêtres (W) sur une couche intermédiaire ou semelle intercalaire (3) de ladite semelle (1).

15. Moule (10) selon la revendication 14, comprenant :
- une première plaque ou plaque de base (11) qui comprend ou délimite une surface supérieure (11a), pendant l'utilisation, qui définit ledit siège de logement (HS) pour une couche inférieure ou de roulement (2) de ladite semelle (1),
- ledit premier demi-moule (12) et ledit deuxième demi-moule (13) étant associés de manière opérationnelle ou, pendant l'utilisation, associables à ladite première plaque ou plaque de base (11),
- une deuxième plaque ou plaque de fermeture (14) pouvant être associée de manière opérationnelle à ou sur ledit premier demi-moule (12) et à ou sur ledit deuxième demi-moule (13) lorsque ces derniers sont dans ladite configuration opérationnelle fermée (CC),
ladite première plaque ou plaque de base (11) ou ladite deuxième plaque ou plaque de fermeture (14) comprenant ou définissant, au niveau d'une portion médiale et/ou arrière, pendant l'utilisation, d'une surface inférieure, pendant l'utilisation, de celle-ci (14a), un deuxième élément saillant profilé conçu pour former une première zone de logement (HZ1) pour au moins un insert d'amortissement (5) de ladite semelle (1).

16. Procédé (100) permettant d'obtenir une semelle (1) pour chaussure, telle que par exemple la chaussure de travail, de sport, orthopédique, de course, de marche ou de randonnée, comprenant les étapes de :
- mouler, au moyen d'un premier moule (20), une couche inférieure ou de roulement (2) en caoutchouc,
- mouler, au moyen d'un deuxième moule (10) selon la revendication 14 ou 15 sur ou autour de ladite couche inférieure ou de roulement (2) une couche intermédiaire ou semelle intercalaire (3) en polyuréthane avec une ou plusieurs fenêtres (W) incluses ou délimitées dans au moins une première zone de logement (HZ1) ouverte vers le haut définie ou incluse dans au moins une portion arrière ou zone de l'arrière pied (4c) et/ou dans au moins une portion intermédiaire ou zone du médio-pied (4b) de ladite couche intermédiaire ou semelle intercalaire (3),
- fournir au moins un insert d'amortissement (5), et
- relier de manière opérationnelle ledit au moins un insert d'amortissement (5) dans ladite au moins une première zone de logement (HZ1) comprise ou définie sur ladite couche intermédiaire ou semelle intercalaire (3) au niveau de ladite au moins une portion arrière ou zone de l'arrière pied (4c) de celle-ci et/ou de ladite au moins une portion intermédiaire ou zone du médio-pied (4b) de celle-ci,
afin d'obtenir une semelle mobile comme un corps unique ou un composant unique pour la contrainte ultérieure par moulage sur une tige pour fabriquer une chaussure.

17. Procédé (100) permettant d'obtenir une chaussure comprenant initialement les étapes du procédé selon la revendication 16, puis l'étape de préparation d'une tige et ensuite l'étape de moulage, au moyen d'un troisième moule, sur ou autour de ladite couche intermédiaire ou semelle intercalaire (3), déjà moulée sur ou autour de ladite couche inférieure ou de roulement (2) et avec ledit au moins un insert d'amortissement (5) relié de manière opérationnelle dans ladite au moins une première zone de logement (HZ1), une couche supérieure ou semelle intérieure (6), cette dernière étant moulée par injection entre ladite couche intermédiaire ou semelle intercalaire (3) et ladite tige (7), afin de remplir l'espace entre elles, de sorte que ladite couche supérieure ou semelle intérieure (6) constitue une couche de contrainte ou de liaison entre la semelle et la tige.

18. Procédé (100) selon la revendication 16 ou 17, dans lequel ladite étape de fourniture comprend les étapes de :
- fournir un premier matériau ou matrice,
- fournir une pluralité d'éléments granulaires (5b),
- incorporer ladite pluralité d'éléments granulaires (5b) dans ledit premier matériau ou matrice,
- former un corps principal (5a) pour ledit au moins un insert d'amortissement (5) qui comprend ladite pluralité d'éléments granulaires (5b) incorporés dans ledit premier matériau ou matrice.
